# EUROPÄISCHE PATENTSCHRIFT

(11) **EP 2 606 797 B1**
(45) Veröffentlichungstag und Bekanntmachung des Hinweises auf die Patenterteilung: **30.07.2014**
(21) Anmeldenummer: 13157697.7
(22) Anmeldetag: 05.01.2011
(51) Int. Cl.: A47L 5/36, A47L 7/00, A47L 9/12, F16K 24/04, B01D 46/24, B01D 46/52

(54) **Nass- / Trocken-Sauger-Filter**
Wet / dry cleaner filter
Filtre d'aspirateur sec / humide

(30) Priorität: 12.01.2010 DE 102010004714
(43) Veröffentlichungstag der Anmeldung: 26.06.2013
(62) Teilanmeldung aus: 11700328.5
(73) Patentinhaber: Alfred Kärcher GmbH & Co. KG, 71364 Winnenden (DE)
(72) Erfinder: Knee, Roger, 73614 Schorndorf (DE); Erbel, Günther, 74523 Schwäbisch Hall (DE); Zerrer, Thomas, 73663 Berglen (DE); Venturini, Eugenio, 46033 Casteldario MN (IT)
(74) Vertreter: Hoeger, Stellrecht & Partner Patentanwälte

(56) Entgegenhaltungen:
- WO-A1-98/07361
- DE-A1- 19 807 664
- DE-A1-102005 054 273
- US-A- 4 629 482

## Beschreibung

Die Erfindung betrifft ein Staubsaugerfilter für einen Nass-/Trocken-Sauger mit einem Filterelement, das an einer Filterhalterung des Nass-/Trocken-Saugers fixierbar ist und einen von der von einem Saugaggregat des Nass-/Trockensaugers angesaugten Saugluft durchströmbaren Filterkörper aufweist zum Abscheiden von mit der Saugluft mitgeführtem Sauggut, insbesondere Staubund Schmutzpartikeln.

Staubsauger umfassen üblicherweise einen Schmutzsammelbehälter mit einem Saugeinlass, an den eine Saugleitung, beispielsweise ein Saugschlauch, angeschlossen werden kann. Mittels eines Saugaggregates wird der Schmutzsammelbehälter mit Unterdruck beaufschlagt, so dass sich eine Saugströmung ausbildet und dadurch Sauggut, beispielsweise Schmutz- und Staubteilchen, in den Schmutzsammelbehälter eingesaugt werden kann. Im Strömungsweg zwischen dem Schmutzsammelbehälter und dem Saugaggregat befindet sich eine Filterhalterung, an der ein Staubsaugerfilter lösbar fixierbar ist. Die Saugluft durchströmt das Staubsaugerfilter, wobei mitgeführtes Sauggut am Filter abgeschieden wird.

Es sind Staubsauger bekannt, mit deren Hilfe nicht nur trockenes Sauggut aufgesaugt werden kann, sondern auch feuchtes Sauggut und sogar Flüssigkeiten. Derartige Staubsauger werden üblicherweise als Nass-/Trocken-Sauger bezeichnet. Kommt für den Filterkörper des Staubsaugerfilters ein wasseranziehendes Filtermedium zum Einsatz, das von Flüssigkeit benetzt wird, so erhöht sich in vielen Fällen der Strömungswiderstand des Filterkörpers, d. h. er wird zunehmend luftundurchlässiger. Dies kann zur Folge haben, dass sich stromabwärts des Filterkörpers bei fortlaufendem Betrieb des Saugaggregates ein beträchtlicher Unterdruck ausbildet, unter dessen Wirkung den Filterkörper durchdringende Flüssigkeit in das Saugaggregat eingesaugt wird. Diese Schwierigkeit besteht insbesondere dann, wenn das Filterelement in Form einer Filterpatrone ausgestaltet ist mit einem hohlzylindrischen Filterkörper. Im feuchten Zustand des Filterkörpers kann sich im zylindrischen Innenraum des Filterkörpers ein derartiger Unterdruck ausbilden, dass der Flüssigkeitsspiegel im Filterkörper so weit angehoben wird, dass die Flüssigkeit in das Saugaggregat eindringen kann. Dies kann zu Störungen des Staubsaugers führen, und sollte deshalb verhindert werden.

Um ein Eindringen von Flüssigkeit in das Saugaggregat zu vermeiden, weisen die meisten Nass-/Trocken-Sauger am Eingang des Saugaggregates ein Sicherheitsventil auf, das bei Erreichen eines bestimmten Flüssigkeitsspiegels im Schmutzsammelbehälter den Eingang des Saugaggregates verschließt. Häufig ist ein derartiges Sicherheitsventil in Form eines Schwimmerventils ausgebildet, wie es beispielsweise in der DE 198 07 664 C2 beschrieben ist.

Häufig wird die Saugluft auch zur Kühlung des Saugaggregates herangezogen. Deshalb weisen die bekannten Sicherheitsventile in vielen Fällen einen kleinen Kühlluftkanal auf, der auch bei erhöhtem Flüssigkeitsspiegel im Schmutzsammelbehälter offen bleibt, um sicherzustellen, dass auch bei geschlossenem Sicherheitsventil das Saugaggregat von Saugluft gekühlt werden kann. Damit erhöht sich aber die Gefahr, dass bei Ausbildung eines hohen Unterdruckes, wie er sich bei einem mit Flüssigkeit benetzten Filterkörper mit wasseranziehendem Filtermedium ausbilden kann, Flüssigkeit in das Saugaggregat eindringt.

Um das Eindringen von Flüssigkeit in das Saugaggregat zu verhindern, wird in der EP 0 921 748 B1 ein Filterkörper mit einem wasserabweisenden Filtermedium vorgeschlagen. Dadurch bleibt der Filterkörper auch dann luftdurchlässig, wenn er mit Flüssigkeit in Kontakt kommt. Saugluft kann also weiterhin durch den Filterkörper hindurchströmen, so dass Sauggut abgeschieden werden kann. Für die Flüssigkeit bildet das wasserabweisende Filtermedium allerdings eine Sperre aus. Hydrophobe, also wasserabweisende, Filtermedien können häufig nicht vollständig vermeiden, dass Flüssigkeit durch den Filterkörper hindurchtritt. Deshalb ist auch bei Verwendung eines wasserabweisenden Filtermediums der Einsatz eines Sicherheitsventils ratsam, um das Eindringen von Flüssigkeit in das Saugaggregat zuverlässig zu verhindern.

Wie bereits erwähnt, haben sich bei Nass-/Trocken-Saugern Sicherheitsventile in Form von Schwimmerventilen als vorteilhaft erwiesen. Diese weisen einen Schwimmerkörper auf, der in einer Schließstellung den Eingang des Saugaggregates mit Ausnahme eines frei bleibenden Kühlluftkanals verschließt. Das Einnehmen der Schließstellung erfolgt in Abhängigkeit vom Pegel der den Schwimmerkörper umgebenden Flüssigkeit. Da die Schwimmerventile bezogen auf die Saugströmung üblicherweise stromabwärts des jeweiligen Staubsaugerfilters angeordnet sind, können die Schwimmerventile nur dann zum Einsatz kommen, wenn der Filterkörper des Staubsaugerfilters eine gewisse Wasserdurchlässigkeit aufweist.

Filterkörper von Staubsaugerfiltern, die für den Einsatz in Nass-/Trocken-Saugern vorgesehen sind, sollten daher eine gute Wasserdurchlässigkeit aufweisen, damit bei Einsatz eines Schwimmerventils der Schwimmerkörper bei Erreichen eines maximalen Flüssigkeitsspiegels zuverlässig seine Schließstellung einnehmen kann, und sie sollten auch eine hohe Luftdurchlässigkeit aufweisen, um den Strömungswiderstand des Staubsaugerfilters sowohl im nassen als auch im trockenen Zustand möglichst gering zu halten. Darüber hinaus sollten sie einen hohen Abscheidegrad für Sauggut aufweisen.

Aus der Offenlegungsschrift DE 10 2005 054 273 A1 ist ein Filterelement mit einem Grundkörper bekannt. Der Grundkörper umfasst zumindest ein Filtermaterial, das durch Durchgangs- und/oder Ausnehmungsbereiche in seiner Materialstruktur unterbrochen ist. Um eine hohe Abscheideleistung bei effizienter Tiefenwirkung zu realisieren, ist das Filtermaterial porös ausgebildet, und die Porengröße nimmt zumindest in einer Richtung bereichsweise zu oder ab.

Aufgabe der vorliegenden Erfindung ist es, einen Staubsaugerfilter der eingangs genannten Art derart weiterzubilden, dass der Filterkörper im nassen und im trockenen Zustand einen hohen Abscheidegrad für Sauggut aufweist, und sowohl für Wasser als auch für Luft gut durchlässig ist.

Diese Aufgabe wird bei einem Staubsaugerfilter der gattungsgemäßen Art erfindungsgemäß dadurch gelöst, dass der Filterkörper mindestens einen luftdurchlässigen hydrophoben Filterabschnitt und mindestens einen luftdurchlässigen hydrophilen Filterabschnitt aufweist, die in Strömungsrichtung der Saugluft parallel zueinander angeordnet sind.

Beim erfindungsgemäßen Staubsaugerfilter umfasst der Filterkörper mindestens zwei verschiedene Filterabschnitte, nämlich zumindest einen hydrophoben, also wasserabweisenden, Filterabschnitt und zumindest einen hydrophilen, also wasseranziehenden, Filterabschnitt. Sämtliche Filterabschnitte sind luftdurchlässig, so dass Saugluft hindurchströmen kann.

Die verschiedenen Filterabschnitte sind bezogen auf die Strömungsrichtung der Saugluft parallel zueinander angeordnet. Ein Teil der angesaugten Saugluft kann also einen hydrophilen Filterabschnitt durchströmen, und ein anderer Teil der Saugluft kann einen hydrophoben Filterabschnitt durchströmen.

Der mindestens eine hydrophobe Filterabschnitt stellt sicher, dass Saugluft auch dann durch den Filterkörper hindurchströmen kann, wenn der Filterkörper mit Flüssigkeit benetzt ist. Der Strömungswiderstand des mindestens einen hydrophoben Filterabschnitts ändert sich nämlich allenfalls unwesentlich, wenn der Filterabschnitt mit Flüssigkeit in Kontakt gelangt. Das erfindungsgemäße Staubsaugerfilter weist somit auch im nassen Zustand eine hohe Luftdurchlässigkeit auf.

Der mindestens eine hydrophile Filterabschnitt stellt sicher, dass auch Flüssigkeit durch das Staubsaugerfilter hindurch gelangen kann. Somit kann das erfindungsgemäße Staubsaugerfilter besonders vorteilhaft in Kombination mit einem bezogen auf die Saugströmung stromabwärts des Staubsaugerfilters angeordneten Schwimmerventil zum Einsatz kommen, denn die Wasserdurchlässigkeit des mindestens einen hydrophilen Filterabschnitts gewährleistet eine einwandfreie Schließfunktion des Schwimmerventils.

Sowohl der mindestens eine hydrophobe Filterabschnitt als auch der mindestens eine hydrophile Filterabschnitt weisen jeweils einen beachtlichen Abscheidegrad für Sauggut auf.

Der mindestens eine hydrophobe Filterabschnitt kann einen sehr hohen Abscheidegrad für Sauggut aufweisen, da er für Wasser nicht durchlässig zu sein braucht. Die Wasserdurchlässigkeit wird durch den mindestens einen hydrophilen Filterabschnitt gewährleistet.

Insbesondere kann vorgesehen sein, dass der mindestens eine hydrophobe Filterabschnitt einen höheren Abscheidegrad für Sauggut aufweist als der mindestens eine hydrophile Filterabschnitt.

Der mindestens eine hydrophile Filterabschnitt kann beispielsweise unter Verwendung eines imprägnierten Filterpapiers hergestellt werden. Um die hydrophile Eigenschaft sicherzustellen, kann zur Imprägnierung beispielsweise ein Phenolharz verwendet werden.

Der mindestens eine hydrophobe Filterabschnitt kann ebenfalls unter Verwendung eines Filterpapiers hergestellt werden, das mit einer hydrophoben Substanz imprägniert ist. Es kann allerdings auch vorgesehen sein, dass der mindestens eine hydrophobe Filterabschnitt unter Verwendung einer Kunststoffmembran hergestellt ist. Derartige Kunststoffmembranen sind dem Fachmann an sich bekannt, sie werden beispielsweise in der EP 0 921 748 B1 beschrieben.

Die hydrophilen und hydrophoben Filterabschnitte können jeweils als selbstständig handhabbare Filterteile ausgestaltet sein. Beispielsweise kann vorgesehen sein, dass der Staubsaugerfilter ein Kombinationsfilter ausbildet mit einem hydrophilen Filterteil und einem hydrophoben Filterteil, die zusammengesteckt werden können oder gemeinsam an einer Filterhalterung des Staubsaugers festgelegt werden können.

Es kann allerdings auch vorgesehen sein, dass die hydrophilen und hydrophoben Filterabschnitte unlösbar miteinander verbunden sind.

Von besonderem Vorteil ist es, wenn der Filterkörper unter Einsatz eines Filtermaterials hergestellt ist, das hydrophile und hydrophobe Flächenbereiche aufweist. Die hydrophilen und hydrophoben Filterabschnitte werden von den jeweiligen Flächenbereichen des Filtermaterials gebildet und sind somit einstückig miteinander verbunden.

Es kann vorgesehen sein, dass das Filtermaterial, beispielsweise ein Filterpapier, bereichsweise mit unterschiedlichen Substanzen imprägniert ist. Durch die Imprägnierung mit den unterschiedlichen Substanzen können der mindestens eine hydrophile Filterabschnitt und der mindestens eine hydrophobe Filterabschnitt kostengünstig erzeugt werden.

Günstig ist es, wenn sich der mindestens eine hydrophobe Filterabschnitt über maximal die Hälfte der gesamten Filterfläche des Filterkörpers erstreckt.

Als besonders vorteilhaft hat es sich erwiesen, wenn die Filterfläche des mindestens einen hydrophoben Filterabschnitts gleich groß oder kleiner ist wie/als die Filterfläche des mindestens einen hydrophilen Filterabschnitts. Der Flächenanteil des hydrophilen Filterabschnitts an der gesamten Filterfläche des Staubsaugerfilters ist bei einer derartigen Ausgestaltung mindestens so groß wie der Flächenanteil des hydrophoben Filterabschnitts. Es hat sich gezeigt, dass gerade bei Verwendung des erfindungsgemäßen Staubsaugerfilters in Kombination mit einem Schwimmerventil das Eindringen von Flüssigkeit in das Saugaggregat besonders zuverlässig verhindert werden kann, wenn die Filterfläche des mindestens einen hydrophilen Filterabschnitts zumindest so groß ist wie die von dem mindestens einen hydrophoben Filterabschnitt bereit gestellte Filterfläche.

Bei einer bevorzugten Ausgestaltung der Erfindung ist das Filterelement in Form einer Filterpatrone oder Filterkartusche ausgestaltet mit einem zylindermantelförmigen Filterkörper, der zwischen einer oberen und einer unteren Endscheibe angeordnet ist. Derartige Filterpatronen können auch von Laien auf einfache Weise ausgetauscht werden, und weisen eine beachtliche mechanische Stabilität auf. Sie zeichnen sich daher durch eine gute Handhabbarkeit aus.

Bei Ausgestaltung des Filterelementes in Form einer Filterpatrone ist es günstig, wenn die hydrophoben und hydrophilen Filterabschnitte in Umfangsrichtung der Filterpatrone einander abwechselnd angeordnet sind, und sich in axialer Richtung zumindest über einen Teilbereich der Filterpatrone erstrecken. Insbesondere kann vorgesehen sein, dass sich die Filterabschnitte von der oberen bis zur unteren Endscheibe erstrecken.

Günstigerweise grenzt ein hydrophober Filterabschnitt unmittelbar an einen hydrophilen Filterabschnitt. So kann beispielsweise vorgesehen sein, dass jeweils ein hydrophober Filterabschnitt mit einem hydrophilen Filterabschnitt verklebt ist.

Von besonderem Vorteil bei der Ausgestaltung des Filterelementes in Form einer Filterpatrone ist es, wenn jeweils zwei hydrophile Filterabschnitte und jeweils zwei hydrophobe Filterabschnitte einander diametral gegenüberliegend angeordnet sind. Eine derartige Ausgestaltung ist vor allem dann günstig, wenn die an der Filterhalterung des Staubsaugers fixierte Filterpatrone ein Schwimmerventil umgibt, da dann der Schwimmerkörper auch im nassen Zustand der Filterpatrone an mindestens zwei einander diametral gegenüberliegenden Seiten von Saugluft angeströmt werden kann. Dadurch wird die Gefahr verringert, dass der Schwimmerkörper beim Übergang von seiner Offenstellung in seine Schließstellung verkantet, oder von unsymmetrisch auf ihn einwirkender Saugluft unbeabsichtigt in seine Schließstellung bewegt wird. Im trockenen Zustand der Filterpatrone werden während des Betriebes des Staubsaugers sowohl die hydrophoben als auch die hydrophilen Filterabschnitte von Saugluft durchströmt, so dass der von der Filterpatrone umgebene Schwimmerkörper über seinen gesamten Umfang symmetrisch von Saugluft angeströmt wird. Die Gefahr, dass der Schwimmerkörper beim Übergang von seiner Offenstellung in seine Schließstellung verkantet, oder unbeabsichtigt seine Schließstellung einnimmt, stellt sich praktisch nicht. Kommt die Filterpatrone mit Flüssigkeit in Kontakt, so verringert sich die Luftdurchlässigkeit der hydrophilen Filterabschnitte, wohingegen die hydrophoben Filterabschnitte weiterhin eine sehr hohe Luftdurchlässigkeit aufweisen. Da mindestens zwei hydrophobe Filterabschnitte einander diametral gegenüberliegen, wird der von der Filterpatrone umgebene Schwimmerkörper somit auch bei nasser Filterpatrone auf einander gegenüberliegenden Seiten von Saugluft angeströmt, so dass keine Gefahr besteht, dass der Schwimmerkörper beim Übergang von seiner Offenstellung in seine Schließstellung verkantet oder unbeabsichtigt seine Schließstellung einnimmt.

Günstigerweise erstrecken sich die hydrophoben Filterabschnitte in Umfangsrichtung der Filterpatrone jeweils über einen gleich großen oder kleineren Winkelbereich wie/als die hydrophilen Filterabschnitte. Der Anteil der hydrophoben Filterabschnitte an der gesamten Filterfläche der Filterpatrone ist somit gleich groß oder aber etwas geringer wie/als der Anteil, den die hydrophilen Filterabschnitte an der gesamten Filterfläche der Filterpatrone aufweisen.

Es kann beispielsweise vorgesehen sein, dass sich zwei einander diametral gegenüberliegende hydrophobe Filterabschnitte in Umfangsrichtung der Filterpatrone über identische Winkelbereiche von jeweils maximal 90° erstrecken. In Umfangsrichtung zwischen den hydrophoben Filterabschnitten kann jeweils ein hydrophiler Filterabschnitt angeordnet sein, der sich günstigerweise in Umfangsrichtung der Filterpatrone über einen Winkelbereich von je mindestens 90° erstreckt.

Die hydrophoben und hydrophilen Filterabschnitte können in Umfangsrichtung der Filterpatronen unmittelbar aneinander angrenzen.

Bei einer alternativen Ausgestaltung des Filterelements in Form einer Filterpatrone sind die hydrophoben und hydrophilen Filterabschnitte in axialer Richtung einander abwechselnd angeordnet, und erstrecken sich in Umfangsrichtung der Filterpatrone zumindest über einen Teilbereich der Filterpatrone. Bei einer derartigen Ausgestaltung ist die Filterpatrone in axialer Richtung in mindestens einen hydrophoben und mindestens einen hydrophilen Filterabschnitt unterteilt.

Wie bereits erläutert, können die Filterabschnitte selbstständig handhabbare Filterteile ausbilden. Bei einer derartigen Ausführungsform umfasst die Filterpatrone zumindest ein hydrophobes Patronenteil und mindestens ein hydrophiles Patronenteil, die in axialer Richtung zusammengefügt werden können.

Es ist auch möglich, bei einer Filterpatrone die sich in axialer Richtung abwechselnden hydrophoben und hydrophilen Filterabschnitte über eine unlösbare Verbindung miteinander zu verbinden, beispielsweise können die verschiedenen Filterabschnitte miteinander verklebt sein.

Bevorzugt ist ein hydrophiler Filterabschnitt an der unteren Endscheibe der Filterpatrone angeordnet. Die untere Endscheibe bildet in der Regel denjenigen Teil des Staubsaugerfilters, der am weitesten in den Schmutzsammelbehälter eintaucht und daher bei zunehmendem Füllgrad des Schmutzsammelbehälters als erster mit Flüssigkeit benetzt wird. Dieser Filterabschnitt ist bevorzugt hydrophil ausgestaltet, und weist daher eine gewisse Wasserdurchlässigkeit auf, so dass der Flüssigkeitsspiegel innerhalb der Filterpatrone bei fortdauerndem Betrieb des Staubsaugers in gleicher Weise ansteigen kann wie der Flüssigkeitsspiegel außerhalb der Filterpatrone.

Der an der unteren Endscheibe angeordnete hydrophile Filterabschnitt erstreckt sich vorzugsweise über den gesamten Umfang der Filterpatrone.

Es kann vorgesehen sein, dass ein hydrophober Filterabschnitt an der oberen Endscheibe der Filterpatrone angeordnet ist. Das obere Ende der Filterpatrone ist somit zumindest bereichsweise wasserundurchlässig ausgestaltet, es weist aber eine gute Luftdurchlässigkeit auf.

Günstigerweise erstreckt sich der an der oberen Endscheibe angeordnete hydrophobe Filterabschnitt über den gesamten Umfang der Filterpatrone.

Bevorzugt bilden die hydrophoben und hydrophilen Filterabschnitte in ihrer Gesamtheit ein sternförmig gefaltetes Filtermaterial, das einen hohlzylindrischen Filterkörper der Filterpatrone ausbildet.

Günstigerweise bilden die hydrophoben und/oder hydrophilen Filterabschnitte ein Oberflächenfilter aus. Oberflächenfilter zeichnen sich dadurch aus, dass das Sauggut an der Oberfläche der Filterabschnitte abgeschieden wird. Diese können daher auf einfache Weise gereinigt werden.

Von besonderem Vorteil ist es, wenn die hydrophoben und/oder hydrophilen Filterabschnitte eine Beschichtung mit Nanofasern aufweisen. Die Nanofaserschicht bildet eine feinporige Oberfläche, die das Sauggut zuverlässig an der Oberfläche der Filterabschnitte zurückhält. Die Nanofasern weisen bevorzugt einen Durchmesser von weniger als 1 Mikrometer, insbesondere maximal 0,5 Mikrometer auf.

Die Erfindung betrifft auch die Verwendung des voranstehend erläuterten Staubsaugerfilters in Kombination mit einem Schwimmerventil bei einem Nass-/Trocken-Sauger, wobei das Schwimmerventil bezogen auf die vom Saugaggregat des Nass-/Trocken-Saugers erzeugte Saugströmung stromabwärts des Staubsaugerfilters angeordnet ist.

Wie bereits erläutert ist die Verwendung des Staubsaugerfilters in Kombination mit dem Schwimmerventil von besonderem Vorteil, wenn das Schwimmerventil einen unverschließbaren Kühlluftkanal aufweist.

Die nachfolgende Beschreibung bevorzugter Ausführungsformen der Erfindung dient im Zusammenhang mit der Zeichnung der näheren Erläuterung. Es zeigen:
- Figur 1:: eine Schnittansicht eines Staubsaugers mit einem Schwimmerventil, das von einem erfindungsgemäßen Staubsaugerfilter gemäß einer ersten Ausführungsform umgeben ist;
- Figur 2:: eine vergrößerte Schnittansicht des vom Staubsaugerfilter umgebenen Schwimmerventils aus Figur 1;
- Figur 3:: eine perspektivische Darstellung der ersten Ausführungsform des erfindungsgemäßen Staubsaugerfilters;
- Figur 4:: eine Schnittansicht des Staubsaugerfilters aus Figur 3 quer zu dessen Längsachse und
- Figur 5:: eine perspektivische Darstellung einer zweiten Ausführungsform eines erfindungsgemäßen Staubsaugerfilters.

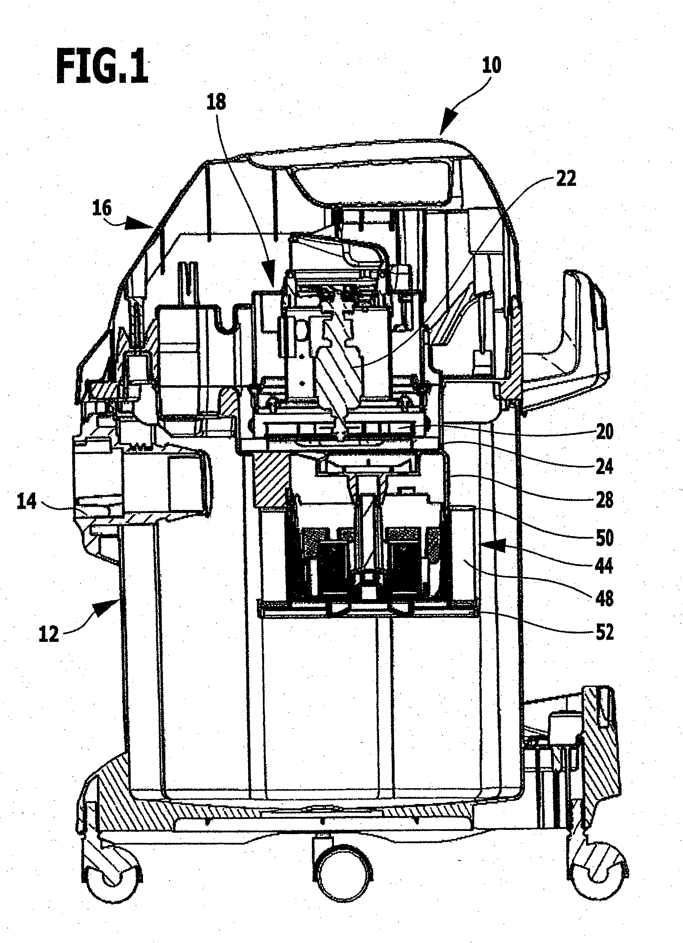

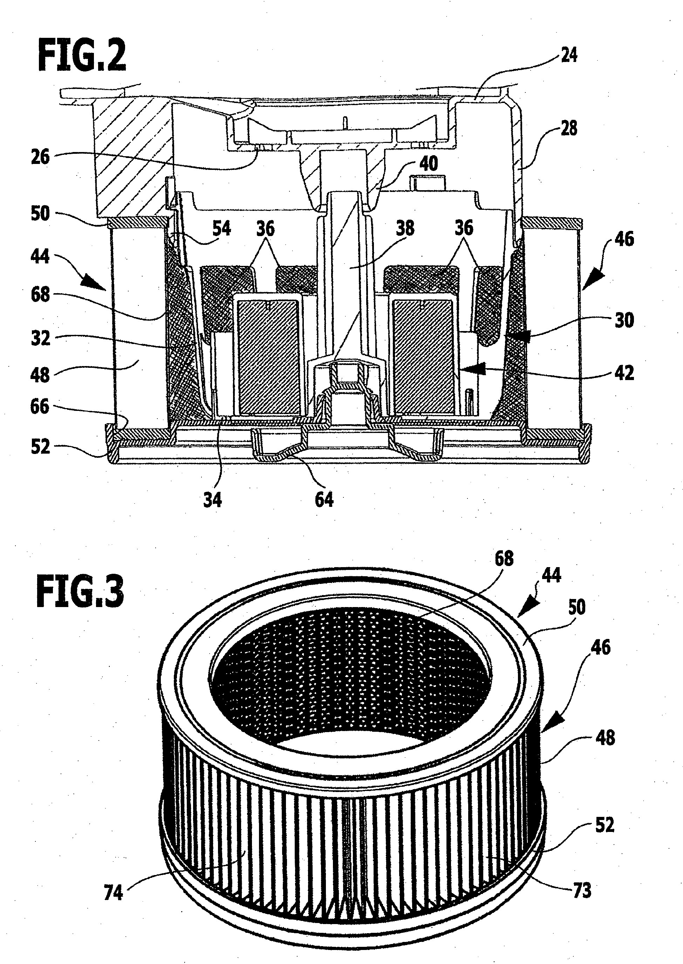

In den Figuren 1 und 2 ist schematisch ein insgesamt mit dem Bezugszeichen 10 belegter Staubsauger in Form eines Nass-/Trocken-Saugers dargestellt, mit dem sowohl trockenes als auch feuchtes Sauggut und auch Flüssigkeit angesaugt werden können. Er umfasst einen Schmutzsammelbehälter 12 mit einem Saugeinlass 14, an den eine in der Zeichnung nicht dargestellte, an sich bekannte Saugleitung angeschlossen werden kann, die an ihrem freien Ende beispielsweise eine Saugdüse trägt zum Absaugen einer Fläche, beispielsweise einer Bodenfläche. Die Saugleitung kann zum Beispiel in Form eines Saugschlauches ausgestaltet sein.

Auf den Schmutzsammelbehälter 12 ist ein Oberteil 16 des Staubsaugers 10 aufgesetzt, das ein Saugaggregat 18 umgibt. Das Saugaggregat 18 umfasst in üblicher Weise ein Sauggebläse 20, das von einem Elektromotor 22 angetrieben wird.

Das Oberteil 16 bildet eine den Schmutzsammelbehälter 12 abdeckende Zwischenwand 24 aus, die auf ihrer Oberseite des Saugaggregat 18 trägt. Das Saugaggregat 18 steht über eine ringförmige Einlassöffnung 26 der Zwischenwand 24 mit dem Innenraum des Schmutzsammelbehälters 12 in Strömungsverbindung.

Die Einlassöffnung 26 ist von einem Ringkragen 28 umgeben, der von der Zwischenwand 24 nach unten absteht und in den Schmutzsammelbehälter 12 eintaucht. Innenseitig ist am Ringkragen 28 ein topfförmiges Gehäuse 30 gehalten, mit einer Seitenwand 32, die vom Ringkragen 28 nach unten absteht, und mit einer Bodenwand 34. Die Seitenwand 32 weist eine Vielzahl von Durchtrittsöffnungen 36 auf. Innenseitig schließt sich gehäusemittig an die Bodenwand 34 einstückig ein Führungsprofil 38 an, das sich nach oben in Richtung Saugturbine 20 bis zu einer an die Zwischenwand 24 angeformten Führungshülse 40 erstreckt, die von der ringförmigen Einlassöffnung 26 umgeben ist.

Das Gehäuse 30 nimmt einen hohlzylinderförmigen Schwimmerkörper 42 auf, der in seiner in Figur 2 dargestellten Offenstellung im Abstand zur Einlassöffnung 26 angeordnet ist und auf der Bodenwand 34 des Gehäuses 30 aufsitzt. Dringt Flüssigkeit über die Durchtrittsöffnungen 36 in das Innere des Gehäuses 30 ein, so erfährt der Schwimmerkörper 42 einen Auftrieb, so dass er sich entlang des Führungsprofils 38 in Richtung Einlassöffnung 26 bewegt. Wird ein maximal zulässiger Flüssigkeitsspiegel erreicht, so legt sich der Schwimmerkörper 42 in einer in der Zeichnung nicht dargestellten Schließstellung dichtend an die ringförmige Einlassöffnung 26 an. In der Schließstellung verschließt somit der Schwimmerkörper 42 die Einlassöffnung 26 mit Ausnahme eines in der Zeichnung nicht dargestellten Kühlluftkanals, über den auch dann Saugluft in das Saugaggregat 18 zu dessen Kühlung eingesaugt werden kann, wenn der Schwimmerkörper 42 seine Schließstellung einnimmt.

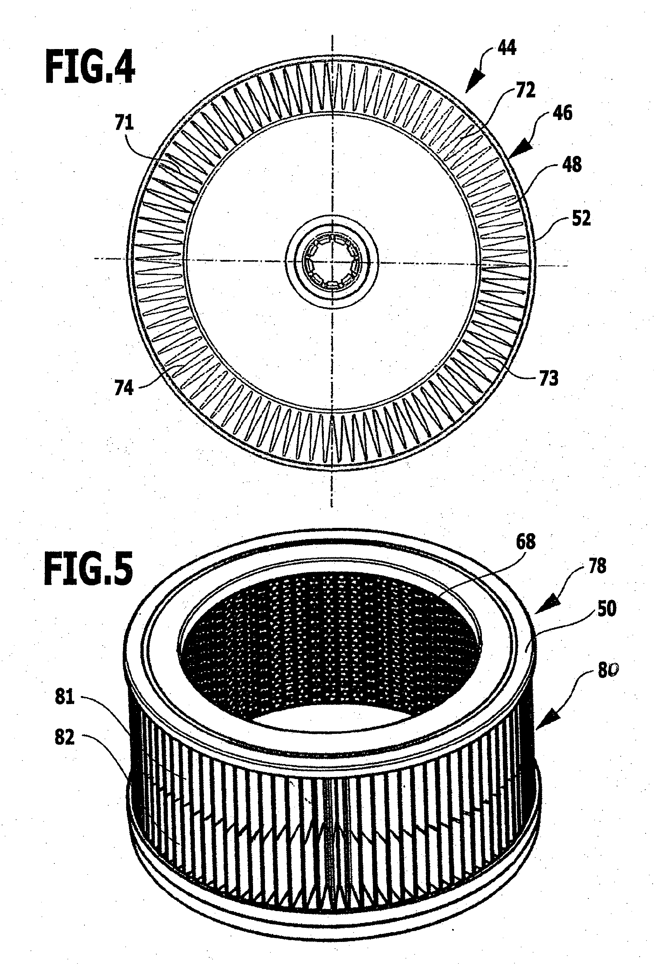

Auf die Außenseite des topfförmigen Gehäuses 30 ist ein erfindungsgemäßes Staubsaugerfilter 44 gemäß einer ersten Ausführungsform aufgeschoben. Dieses bildet ein auswechselbares Filterelement aus in Form einer Filterpatrone 46. Dies wird insbesondere aus den Figuren 3 und 4 deutlich.

Die Filterpatrone 46 umfasst einen zylindermantelförmigen Filterkörper 48, der zwischen einer ringförmigen oberen Endscheibe 50 und einer tellerförmigen unteren Endscheibe 52 angeordnet ist. Die Filterpatrone 46 ist auf den freien Rand 54 des Ringkragens 28 aufgesteckt. Zur Festlegung der Filterpatrone 46 am topfförmigen Gehäuse 30 kommt ein die untere Endscheibe 52 durchgreifendes Befestigungselement 64 zum Einsatz, das beispielsweise nach Art einer Schraube ausgestaltet sein kann und die Filterpatrone insbesondere über eine Bajonett-Verbindung am Führungsprofil 38 festlegt. Die untere Endscheibe 52 weist auf ihrer dem Saugaggregat 18 zugewandten Oberseite eine ringförmige Vertiefung 66 auf, in die ein sternförmig gefaltetes Filtermaterial stirnseitig eintaucht.

Die Filterpatrone 46 umgibt das topfförmige Gehäuse 30 abgedichtet, d. h. ein vom Saugaggregat 18 erzeugter Saugstrom kann nur über die aktive Filterfläche des Filterkörpers 48 in den von der Filterpatrone 46 umgebenen Bereich, und damit über die Durchtrittsöffnungen 36 in das Innere des topfförmigen Gehäuses 30, und von diesem über die ringförmige Einlassöffnung 26 zum Saugaggregat 18 gelangen. Über in der Zeichnung nicht dargestellte Auslassöffnungen des Oberteils 16 kann die angesaugte Saugluft vom Saugaggregat 18 an die Umgebung abgegeben werden.

Beim Durchströmen des Filterkörpers 48 wird von der Saugluft mitgeführtes Sauggut, also insbesondere Schmutz- und Staubpartikel, am Filterkörper 48 abgeschieden. Hierzu weist der Filterkörper 48 mehrere luftdurchlässige Filterabschnitte 71, 72, 73 und 74 auf, die in Umfangsrichtung der Filterpatrone 46 einander abwechselnd angeordnet sind und unmittelbar aneinander angrenzen. Bezogen auf die Strömungsrichtung der Saugluft sind die Filterabschnitte 71 bis 74 parallel zueinander angeordnet. Ein erster Filterabschnitt 71 ist ebenso wie ein dem ersten Filterabschnitt 71 diametral gegenüberliegender dritter Filterabschnitt 73 hydrophob ausgestaltet, und ein zweiter Filterabschnitt 72 ist ebenso wie ein diesem diametral gegenüberliegender vierter Filterabschnitt 74 hydrophil ausgebildet. Die ersten und dritten Filterabschnitte 71, 73 sind somit luftdurchlässig und wasserabweisend, wohingegen die zweiten und vierten Filterabschnitte 72, 74 luftdurchlässig und wasseranziehend sind.

Im dargestellten ersten Ausführungsbeispiel sind sämtliche Filterabschnitte 71, 72, 73 und 74 aus einem Filterpapier gefertigt, das im Falle der ersten und dritten Filterabschnitte 71 und 73 mit einer hydrophoben Substanz, und im Falle der zweiten und vierten Filterabschnitte 72, 74 mit einer hydrophilen Substanz imprägniert ist. Derartige hydrophobe und hydrophile Substanzen sind dem Fachmann bekannt. Die aneinander angrenzenden Filterabschnitte sind jeweils miteinander verklebt. Mit ihrer dem topfförmigen Gehäuse 30 zugewandten Innenseite stützen sich die Filterabschnitte 71, 72, 73 und 74 an einem siebartigen Stützrohr 68 ab, das sich von der oberen Endscheibe 50 bis zur unteren Endscheibe 52 erstreckt und die Filterabschnitte 71, 72, 73 und 74 stabilisiert.

Die hydrophoben Filterabschnitte 71 und 73 erstrecken sich in Umfangsrichtung der Filterpatrone 46 jeweils über einen Winkelbereich von maximal 90°, und die jeweils zwischen den hydrophoben Filterabschnitten 71 und 73 angeordneten hydrophilen Filterabschnitte 72 und 74 erstrecken sich in Umfangsrichtung der Filterpatrone 46 jeweils über einen Winkelbereich von mindestens 90°. In der dargestellten ersten Ausführungsform erstrecken sich sämtliche Filterabschnitte 71 bis 74 jeweils über einen Winkelbereich von 90°.

Während des Betriebes des Staubsaugers 10 wird vom Saugaggregat 18 eine Saugströmung erzeugt, die ausgehend vom Saugeinlass 14 den Schmutzsammelbehälter 12 durchgreift, über die Filterpatrone 46 und die Durchtrittsöffnungen 36 in das Innere des topfförmigen Gehäuses 30, und von diesem über die ringförmige Einlassöffnung 26 zum Saugaggregat 18 gelangt, und vom Saugaggregat 18 über die in der Zeichnung nicht dargestellten Auslassöffnungen des Oberteils 16 an die Umgebung abgegeben wird. Unter der Wirkung der Saugströmung kann trockenes und feuchtes Sauggut, insbesondere auch Flüssigkeit, in den Schmutzsammelbehälter 12 eingesaugt werden. Wird Flüssigkeit angesaugt, so erhöht sich mit zunehmender Betriebsdauer der Flüssigkeitsspiegel innerhalb des Schmutzsammelbehälters 12, und erreicht schließlich die Filterpatrone 46, so dass die Filterabschnitte 71, 72, 73 und 74 mit Flüssigkeit benetzt werden. Die wasserabweisenden Filterabschnitte 71 und 73 weisen allenfalls eine sehr geringe Wasserdurchlässigkeit auf, sie sind jedoch auch im nassen Zustand für die angesaugte Saugluft durchlässig, d. h. die Luftdurchlässigkeit der hydrophoben Filterabschnitte 71 und 73 wird durch die Benetzung mit Flüssigkeit praktisch nicht beeinträchtigt. Somit kann auch im nassen Zustand der Filterpatrone 46 Saugluft angesaugt werden.

Die wasseranziehenden Filterabschnitte 72 und 74 weisen im benetzten Zustand zwar nur eine geringe Luftdurchlässigkeit auf, sie sind aber im Gegensatz zu den wasserabweisenden Filterabschnitten 71 und 73 für Flüssigkeit durchlässig, so dass der Schwimmerkörper 42 von der über die hydrophilen Filterabschnitte 72 und 74 und die Durchtrittsöffnungen 36 in das Innere des topfförmigen Gehäuses 30 eindringenden Flüssigkeit angehoben wird, und bei Erreichen eines maximal zulässigen Flüssigkeitsspiegels die Einlassöffnung 26 mit Ausnahme des nicht dargestellten Kühlluftkanals zuverlässig verschließen kann.

Beim Übergang von seiner Offenstellung in seine Schließstellung gleitet der Schwimmerkörper 42 am Führungsprofil 38 entlang. Da die auch im nassen Zustand luftdurchlässigen hydrophoben Filterabschnitte 71 und 73 einander diametral gegenüber liegen, wird der Schwimmerkörper 42 an einander gegenüberliegenden Seiten von Saugluft angeströmt. Es besteht daher keine Gefahr, dass der Schwimmerkörper 42 beim Übergang von seiner Offenstellung in seine Schließstellung verkantet oder von der Saugluft einseitig angehoben und unbeabsichtigt in seine Schließstellung bewegt wird.

Eine zweite Ausführungsform eines erfindungsgemäßen Staubsaugerfilters ist in Figur 5 schematisch dargestellt, und insgesamt mit dem Bezugszeichen 78 belegt. Es ist als Filterpatrone 80 ausgestaltet, mit einer oberen Endscheibe 50 und einer unteren Endscheibe 52, zwischen denen sich ein sternförmig gefaltetes Filtermaterial erstreckt, das sich innenseitig an einem siebartigen Stützrohr 68 abstützt. Im Unterschied zu der voranstehend erläuterten Filterpatrone 46 weist die in Figur 5 dargestellte Filterpatrone 80 zwei Filterabschnitte 81 und 82 auf, die in axialer Richtung aneinander anschließen, und sich jeweils über den gesamten Umfang der Filterpatrone 80 erstrecken. Der an der oberen Endscheibe 50 angeordnete Filterabschnitt 81 ist hydrophob ausgestaltet, er ist also für Flüssigkeit praktisch nicht durchlässig; wohingegen der an der unteren Endscheibe 52 angeordnete Filterabschnitt 82 hydrophil ausgebildet ist. Die beiden Filterabschnitte 81, 82 sind über eine Klebeschicht miteinander verbunden. In der dargestellten Ausführungsform sind sie jeweils aus Filterpapier hergestellt, das im Falle des hydrophoben Filterabschnittes 81 mit einer hydrophoben Substanz imprägniert ist, und im Falle des hydrophilen Filterabschnittes 82 mit einer hydrophilen Substanz imprägniert ist.

Statt die Filterpapiere des hydrophoben Filterabschnitts 81 und des hydrophilen Filterabschnitts 82 miteinander zu verkleben, kann auch vorgesehen sein, dass ein einziges, sternförmig gefaltetes Filterpapier zum Einsatz kommt, das sich von der oberen Endscheibe 50 bis zur unteren Endscheibe 52 erstreckt, und das bereichsweise mit einer hydrophoben Substanz zur Ausgestaltung des hydrophoben Filterabschnitts 81, und bereichsweise mit einer hydrophilen Substanz zur Ausgestaltung des hydrophilen Filterabschnitts 82 imprägniert ist.

Steigt während des Betriebs des Staubsaugers 10 der Flüssigkeitsspiegel im Schmutzsammelbehälter 12 an, so kommt im Falle des Staubsaugerfilters 78 zunächst der hydrophile Filterabschnitt 82 mit der Flüssigkeit in Kontakt. Der hydrophile Filterabschnitt 82 behält auch bei Benetzung mit Flüssigkeit seine Durchlässigkeit für die Flüssigkeit bei, so dass der Flüssigkeitsspiegel bei fortgesetztem Betrieb des Staubsaugers 10 innerhalb der Filterpatrone 80 in gleicher Weise ansteigen kann wie der Flüssigkeitsspiegel außerhalb der Filterpatrone 80. Im Gegensatz zum hydrophilen Filterabschnitt 82 behält der hydrophobe Filterabschnitt 81 auch bei Benetzung mit Flüssigkeit seine Luftdurchlässigkeit bei, so dass auch bei zunehmendem Flüssigkeitsspiegel Saugluft durch die Filterpatrone 80 hindurch in das Saugaggregat 18 eingesaugt werden kann.

Die Staubsaugerfilter 44 und 78 zeichnen sich aufgrund der Bereitstellung hydrophober 71,73/81 und hydrophiler 72,74/82 Filterabschnitte durch eine hohe Wasserdurchlässigkeit und eine hohe Luftdurchlässigkeit aus, wobei sämtliche Filterabschnitte 71-74/81,82 einen hohen Abscheidegrad für mitgeführtes Sauggut aufweisen. Somit kann mittels des Staubsaugers 10 sowohl trockenes Sauggut als auch feuchtes Sauggut und Flüssigkeit angesaugt werden, wobei bei nasser Filterpatrone 46 bzw. 80 so lange ein Saugbetrieb aufrecht erhalten werden kann, bis die angesaugte Flüssigkeit einen durch die Schließstellung des Schwimmerkörpers 42 vorgegebenen maximalen Flüssigkeitsspiegel erreicht. Der Schwimmerkörper 42 bildet in Kombination mit der Einlassöffnung 26 ein Schwimmerventil aus, dessen Funktion durch die Staubsaugerfilter 44 und 78 nicht beeinträchtigt wird.

## Patentansprüche

1. Staubsaugerfilter (78) für einen Nass-/Trocken-Sauger (10) mit einem Filterelement, wobei das Filterelement an einer Filterhalterung des Nass-/Trocken-Saugers (10) fixierbar ist und einen von der von einem Saugaggregat (18) des Nass-/Trocken-Saugers (10) angesaugten Saugluft durchströmbaren Filterkörper (48) aufweist zum Abscheiden von Sauggut, und wobei der Filterkörper (48) mindestens einen luftdurchlässigen hydrophoben Filterabschnitt (81) und mindestens einen luftdurchlässigen hydrophilen Filterabschnitt (82) aufweist, die in Strömungsrichtung der Saugluft parallel zueinander angeordnet sind, **dadurch gekennzeichnet, dass** das Filterelement in Form einer Filterpatrone (46; 80) ausgestaltet ist, mit einem zylindermantelförmigen Filterkörper (48), der zwischen einer oberen Endscheibe (50) und einer unteren Endscheibe (52) angeordnet ist, wobei die hydrophoben und hydrophilen Filterabschnitte (81, 82) in axialer Richtung einander abwechselnd angeordnet sind und sich in Umfangsrichtung der Filterpatrone (80) zumindest über einen Teilbereich der Filterpatrone (80) erstrecken.

2. Staubsaugerfilter (78) nach Anspruch 1, **dadurch gekennzeichnet, dass** sich der mindestens eine hydrophobe Filterabschnitt (81) über maximal die Hälfte der gesamten Filterfläche des Filterkörpers (48) erstreckt.

3. Staubsaugerfilter (78) nach Anspruch 1 oder 2, **dadurch gekennzeichnet, dass** die Filterfläche des mindestens einen hydrophoben Filterabschnitts (81) gleich groß wie oder kleiner als die Filterfläche des mindestens einen hydrophilen Filterabschnitts (72, 74; 82) ist.

4. Staubsaugerfilter (78) nach einem der voranstehenden Ansprüche, **dadurch gekennzeichnet, dass** ein hydrophiler Filterabschnitt (82) an der unteren Endscheibe (52) der Filterpatrone (80) angeordnet ist.

5. Staubsaugerfilter (78) nach Anspruch 4, **dadurch gekennzeichnet, dass** sich der an der unteren Endscheibe (52) angeordnete hydrophile Filterabschnitt (82) über den gesamten Umfang der Filterpatrone (80) erstreckt.

6. Staubsaugerfilter (78) nach einem der voranstehenden Ansprüche, **dadurch gekennzeichnet, dass** ein hydrophober Filterabschnitt (81) an der oberen Endscheibe (50) der Filterpatrone (80) angeordnet ist.

7. Staubsaugerfilter (78) nach Anspruch 6, **dadurch gekennzeichnet, dass** sich der an der oberen Endscheibe (50) angeordnete hydrophobe Filterabschnitt (81) über den gesamten Umfang der Filterpatrone (80) erstreckt.

8. Staubsaugerfilter (78) nach einem der voranstehenden Ansprüche, **dadurch gekennzeichnet, dass** der mindestens eine hydrophile Filterabschnitt (82) ein imprägniertes Filterpapier aufweist.

9. Staubsaugerfilter (78) nach einem der voranstehenden Ansprüche, **dadurch gekennzeichnet, dass** der mindestens eine hydrophobe Filterabschnitt (81) ein imprägniertes Filterpapier oder eine Kunststoffmembran aufweist.

10. Staubsaugerfilter (78) nach einem der voranstehenden Ansprüche, **dadurch gekennzeichnet, dass** der Filterkörper (48) ein Filtermaterial aufweist, das hydrophile und hydrophobe Flächenbereiche aufweist, wobei das Filtermaterial bereichsweise mit unterschiedlichen Substanzen imprägniert ist.

11. Verwendung des Staubsaugerfilters (78) nach einem der voranstehenden Ansprüche in Kombination mit einem Schwimmerventil bei dem Nass-/Trocken-Sauger (10), wobei das Schwimmerventil bezogen auf die vom Saugaggregat (18) des Nass-/Trocken-Saugers (10) erzeugte Saugströmung stromabwärts des Staubsaugerfilters (44, 78) angeordnet wird.

## Claims

1. Vacuum cleaner filter (78) for a wet/dry vacuum cleaner (10) having a filter element, wherein the filter element is fixable to a filter holder of the wet/dry vacuum cleaner (10) and comprises a filter body (48) through which the suction air suctioned by a suction unit (18) of the wet/dry vacuum cleaner (10) can flow for separating out suctioned material and wherein the filter body (48) comprises at least one air-permeable hydrophobic filter section (81) and at least one air-permeable hydrophilic filter section (82) which are arranged parallel to one another in the direction of flow of the suction air,
**characterized in that** the filter element is configured in the form of a filter cartridge (46; 80) having a filter body (48) in the shape of a cylindrical surface arranged between a top end plate (50) and a bottom end plate (52), wherein the hydrophobic and hydrophilic filter sections (81, 82) are arranged in an axial direction in alternating relationship with each other and extend in a circumferential direction of the filter cartridge (80) over at least a portion of the filter cartridge (80).

2. Vacuum cleaner filter (78) in accordance with claim 1, **characterized in that** the at least one hydrophobic filter section (81) extends over no more than one half of the whole filter area of the filter body (48).

3. Vacuum cleaner filter (78) in accordance with claim 1 or 2, **characterized in that** the filter area of the at least one hydrophobic filter section (81) is equal to or less than the filter area of the at least one hydrophilic filter section (72, 74; 82).

4. Vacuum cleaner filter (78) in accordance with any one of the preceding claims, **characterized in that** a hydrophilic filter section (82) is arranged at the bottom end plate (52) of the filter cartridge (80).

5. Vacuum cleaner filter (78) in accordance with claim 4, **characterized in that** the hydrophilic filter section (82) that is arranged at the bottom end plate (52) extends over the entire circumference of the filter cartridge (80).

6. Vacuum cleaner filter (78) in accordance with any one of the preceding claims, **characterized in that** a hydrophobic filter section (81) is arranged at the top end plate (50) of the filter cartridge (80).

7. Vacuum cleaner filter (78) in accordance with claim 6, **characterized in that** the hydrophobic filter section (81) that is arranged at the top end plate (52) extends over the entire circumference of the filter cartridge (80).

8. Vacuum cleaner filter (78) in accordance with any one of the preceding claims, **characterized in that** the at least one hydrophilic filter section (82) comprises an impregnated filter paper.

9. Vacuum cleaner filter (78) in accordance with any one of the preceding claims, **characterized in that** the at least one hydrophobic filter section (81) comprises an impregnated filter paper or a plastics membrane.

10. Vacuum cleaner filter (78) in accordance with any one of the preceding claims, **characterized in that** the filter body (48) comprises a filter material having hydrophilic and hydrophobic areas, wherein the filter material is impregnated with different substances in portions thereof.

11. Use of the vacuum cleaner filter (78) in accordance with any one of the preceding claims in combination with a float valve in the wet/dry vacuum cleaner (10), wherein the float valve is arranged downstream of the vacuum cleaner filter (44, 78) relative to the suction flow generated by the suction unit (18) of the wet/dry vacuum cleaner (10).

## Revendications

1. Filtre d'aspirateur (78) pour aspirateur sec/humide (10), pourvu d'un élément filtrant, l'élément filtrant pouvant être fixé sur un porte-filtre de l'aspirateur sec/humide (10) et comprenant un corps filtrant (48) pouvant être traversé par l'air aspiré par une unité d'aspiration (18) de l'aspirateur sec/humide (48) et destiné à séparer cet air des matières aspirées, et le corps filtrant (48) comprenant au moins une section filtrante hydrophobe perméable à l'air (81) et au moins une section filtrante hydrophile perméable à l'air (82), lesquelles sont disposées parallèlement l'une à l'autre dans la direction d'écoulement de l'air aspiré, **caractérisé en ce que** l'élément filtrant est réalisé sous la forme d'une cartouche filtrante (46 ; 80) pourvue d'un corps filtrant (48) en forme d'enveloppe cylindrique (48), lequel est disposé entre un disque d'extrémité supérieur (50) et un disque d'extrémité inférieur (52), les sections filtrantes hydrophobes et hydrophiles (81, 82) étant disposées mutuellement en alternance dans la direction axiale et s'étendant dans la direction circonférentielle de la cartouche filtrante (80) au moins sur une partie de la cartouche filtrante (80).

2. Aspirateur (78) selon la revendication 1, **caractérisé en ce que** la ou les sections filtrantes hydrophobes (81) s'étendent sur au maximum la moitié de toute la surface filtrante du corps filtrant (48).

3. Filtre d'aspirateur (78) selon la revendication 1 ou 2, **caractérisé en ce que** la surface filtrante de la ou des sections filtrantes hydrophobes (81) est aussi grande que la surface filtrante de la ou des sections filtrantes hydrophiles (72, 74 ; 82) ou inférieure à celle-ci.

4. Filtre d'aspirateur (78) selon l'une quelconque des revendications précédentes, **caractérisé en ce qu'**une section filtrante hydrophile (82) est disposée sur le disque d'extrémité inférieur (52) de la cartouche filtrante (80).

5. Filtre d'aspirateur (78) selon la revendication 4, **caractérisé en ce que** la section filtrante hydrophile (82) disposée sur le disque d'extrémité inférieur (52) s'étend sur toute la circonférence de la cartouche filtrante (80).

6. Filtre d'aspirateur (78) selon l'une quelconque des revendications précédentes, **caractérisé en ce qu'**une section filtrante hydrophobe (81) est disposée sur le disque d'extrémité supérieur (50) de la cartouche filtrante (80).

7. Filtre d'aspirateur (78) selon la revendication 6, **caractérisé en ce que** la section filtrante hydrophobe (81) disposée sur le disque d'extrémité supérieur (50) s'étend sur toute la circonférence de la cartouche filtrante (80).

8. Filtre d'aspirateur (78) selon l'une quelconque des revendications précédentes, **caractérisé en ce que** la ou les sections filtrantes hydrophiles (82) comprennent un papier filtrant imprégné.

9. Filtre d'aspirateur (78) selon l'une quelconque des revendications précédentes, **caractérisé en ce que** la ou les sections filtrantes hydrophobes (81) comprennent un papier filtrant imprégné ou une membrane en matière plastique.

10. Filtre d'aspirateur (78) selon l'une quelconque des revendications précédentes, **caractérisé en ce que** le corps filtrant (48) comprend un matériau filtrant présentant des zones superficielles hydrophiles et hydrophobes, le matériau filtrant étant imprégné au moins par endroits de différentes substances.

11. Utilisation du filtre d'aspirateur (78) selon l'une quelconque des revendications précédentes en combinaison avec une soupape à flotteur dans un aspirateur sec/humide (10), la soupape à flotteur étant disposée en aval du filtre d'aspirateur (44, 78) par rapport à l'écoulement d'aspiration produit par l'unité d'aspiration (18) de l'aspirateur sec/humide (44, 78).
